(19) Europäisches Patentamt
European Patent Office
Office européen des brevets

(11) EP 4 624 525 A1

(12) **EUROPEAN PATENT APPLICATION**

(43) Date of publication:
**01.10.2025 Bulletin 2025/40**

(21) Application number: **24167008.2**

(22) Date of filing: **27.03.2024**

(51) International Patent Classification (IPC):
***C08L 23/12*** *(2006.01)*

(52) Cooperative Patent Classification (CPC):
(C-Sets available)
**C08L 23/12; B32B 27/32;** C08L 2203/16 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Borealis GmbH**
  **1020 Vienna (AT)**
- **TOPAS Advanced Polymers GmbH**
  **65479 Raunheim (DE)**

(72) Inventors:
- **Tranchida, Davide**
  **4021 Linz (AT)**
- **Gkourmpis, Thomas**
  **444 86 Stenungsund (SE)**
- **Schaffer, Walter**
  **4021 Linz (AT)**
- **Gitsas, Antonios**
  **4021 Linz (AT)**
- **Jamieson, Scott**
  **4021 Linz (AT)**

(74) Representative: **Ter Meer Steinmeister & Partner Patentanwälte mbB**
**Nymphenburger Straße 4**
**80335 München (DE)**

(54) **COMPOSITION FOR CAPACITORS COMPRISING POLYPROPYLENE, CYCLIC OLEFIN POLYMER AND PLASTOMER**

(57) The present invention relates to a composition comprising 70 to 95 wt.-% of a high isotactic homopolymer of propylene, more than 2.5 to less than 30 wt.-% of a cyclic olefin polymer composition, and 0.1 to 2.5 wt.-% of a copolymer of ethylene and one or more $C_4$ to $C_8$ alpha olefin comonomers. The present invention is, furthermore, directed to a film comprising the polypropylene composition. Apart from that, a biaxially oriented film comprising the polypropylene composition and a capacitor are provided.

**Figure 3**

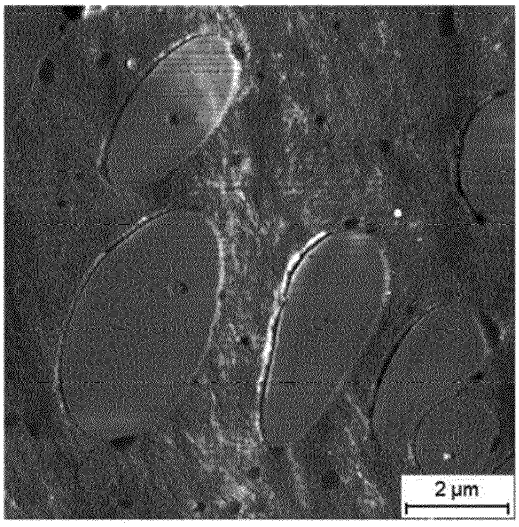


**(a)**

EP 4 624 525 A1

(52) Cooperative Patent Classification (CPC): (Cont.)

C-Sets
**C08L 23/12, C08L 23/0823, C08L 23/0815;**
C08L 2203/16, C08L 2205/03, C08L 2205/035

## Description

### Field of the invention

The present invention relates to a composition comprising 70 to 95 wt.-% of a high isotactic homopolymer of propylene, more than 2.5 to less than 30 wt.-% of a cyclic olefin polymer composition, and 0.1 to 2.5 wt.-% of a copolymer of ethylene and one or more $C_4$ to $C_8$ alpha olefin comonomers. The present invention is, furthermore, directed to a film comprising the polypropylene composition. Apart from that, a biaxially oriented film comprising the polypropylene composition and a capacitor are provided.

### Technical background

Polypropylene has a relatively high dielectric constant, a low dissipation factor and a good dielectric strength. Due to this, polypropylene has been successfully used as a dielectric in various capacitor film applications. Yet, an issue with the known polypropylene capacitor grades is their limited maximum operating temperature. The new generation of inverters, for example traction inverters for electric mobility and inverters for renewable power such as solar and wind, call for a higher temperature resistance of capacitor films.

The demand for an increased maximum operating temperature or - differently speaking - the demand for a higher durability at a predetermined temperature level, has been addressed in different ways up to now.

CN101724195 A proposes to combine polypropylene with a composite rubber powder at a weight ratio of 100 : 0.01 - 2.0. The composite rubber powder has a particle size of 20 to 100 nm and consists of a silicone rubber powder and a nucleating agent at a weight ratio of 99 : 1 to 90 : 10. It is prepared by mixing silicon rubber latex, obtained via irradiation vulcanization, with an aqueous solution or emulsion of the nucleating agent.

EP 2 995 641 A1 teaches that a high temperature resistance can be accomplished by combining beta-nucleation of polypropylene having high purity with a long chain branched polypropylene. More specifically, it provides a polypropylene composition comprising 95.0 to 99.9 wt.-% of propylene homopolymer with a specific melt flow rate and a very low ash content, 0.1 to 5.0 wt.-% of long chain branched polypropylene and up to 1000 ppm of beta-nucleating agent.

WO 2018/210854 A1 and WO 2018/197034 A1 suggest that it may be preferable to blend polypropylene with certain amounts of specific cyclic olefin copolymers in order to obtain materials that are suitable for high temperature capacitor applications. In this context, WO 2018/210854 A1 relies on ethylene norbornene copolymers with specific norbornene contents, whereas WO 2018/197034 A1 suggests cyclic olefin polymers having a glass transition temperature in a broad range from 120 to 170 °C.

EP 4 174 120 A1 relates to the production of biaxially oriented foils from compositions comprising at least 2 cycloolefin polymers as well as at least one semi-crystalline alpha-olefin polymer. The foils are characterized in that the content of all cycloolefin polymers is in the range from 1 to 25 weight percent relative to the total mass of the foil. Furthermore, all cycloolefin polymers contained in the foil have a glass transition temperature in the range of 120 to 180 °C, and the foil comprises at least a first cycloolefin polymer and a second cycloolefin polymer, wherein the second cycloolefin polymer has a higher glass transition temperature than the first cycloolefin polymer. The content of all semi-crystalline $\alpha$-olefin polymers in the foil ranges from 75 to 99 weight percent relative to the total mass of the foil, and all semi-crystalline $\alpha$-olefin polymers contained in the foil have a melting temperature in the range from 150 to 170 °C. Moreover, it is demanded that the weighted arithmetic mean of the glass transition temperatures of all cycloolefin polymers contained in the foil is less than or equal to the weighted arithmetic mean of the melting temperatures of all semicrystalline alpha-olefin polymers contained in said foil.

Yet, in the above approaches, the increase in the temperature resistance of the capacitor polypropylene compositions has only been achieved at the expense of other crucial properties. Mechanical properties such as low shrinkage and high stiffness as well as the capability to endure high voltages have, for example, been sacrificed to a certain extent.

Thus, there is still a need to provide polypropylene compositions having an improved property set for capacitor applications, i.e. a high temperature resistance, a high electrical breakdown strength and suitable mechanical properties. Accordingly, it is an objective of the present invention to overcome the disadvantages of the known compositions and to provide an improved polypropylene composition. Another objective of the present invention is the provision of a polypropylene film having superior performance in capacitor applications. Last but not least, the present invention aims at providing a capacitor with improved specifications. Furthermore, capacitor films also need to have a high temperature resistance and good mechanical properties.

### Summary of the Invention

The above objectives are solved by the polypropylene composition with the features of independent claim 1, the

film with the features of claim 12, the biaxially oriented film with the features of claim 14 and the capacitor with the features of claim 15. Further advantageous embodiments are defined in the dependent claims.

The polypropylene composition according to the present invention comprises 70 to 95 wt.-%, preferably 74.75 to 90 wt.-%, based on the total weight of the polypropylene composition of a high isotactic homopolymer (A) of propylene, more than 2.5 to less than 30 wt.-%, preferably 5 to 25 wt.-% based on the total weight of the polypropylene composition of a cyclic olefin polymer composition (B), and 0.1 to 2.5 wt.-%, preferably 0.25 to 2 wt.-% based on the total weight of the polypropylene composition of a copolymer of ethylene and one or more $C_4$ to $C_8$ alpha olefin comonomers (C). The contents of components (A) to (C) preferably add up to 100 wt.-%.

In an embodiment, the polypropylene composition has a weight ratio (C)/(B) of the copolymer (C) to the cyclic olefin polymer composition (B) in a range of from 0.01 to 0.2, preferably of from 0.01 to 0.1, more preferably of from 0.02 to 0.075, even more preferably from 0.02 to 0.05. When the weight ratio (C)/(B) is within this range, excellent morphological properties can be obtained. In particular, a high degree of dispersion may be achieved when the weight ratio (C)/(B) is within the aforementioned ranges.

Adding a cyclic olefin polymer composition (B) to a high isotactic homopolymer (A) of propylene is technically advantageous because the cyclic olefin polymer composition (B) partially compensates for the increase of electrical conductivity with temperature which is inherent to the high isotactic homopolymer (A) of propylene. Moreover, the combination of a cyclic olefin polymer composition (B) and a high isotactic homopolymer (A) of propylene results in favorable mechanical properties and, thus, facilitates the processing of the composition into films for capacitor applications.

In a preferred embodiment, the polypropylene composition according to the invention is obtained by melt-blending the high isotactic homopolymer (A) of propylene, the cyclic olefin polymer composition (B) and the copolymer of ethylene and one or more $C_4$ to $C_8$ alpha olefin comonomer(s) (C). A device, in which melt-blending can be carried out, may be selected from the group consisting of kneaders, mills and extruders. Further, the cyclic olefin polymer composition (B) may, itself be obtained by melt-blending at least two different cyclic olefin polymers.

In contrast to dry-blending approaches, the melt-blending approach further promotes the provision of a polypropylene composition with high homogeneity. Additionally, by selecting the content of the cyclic olefin polymer composition (B) to be more than 2.5 to less than 30 wt.-% and the content of the copolymer of ethylene and one or more $C_4$ to $C_8$ alpha olefin comonomer(s) (C) to be 0.1 to 2.5 wt.-%, or by selecting the weight ratio (C)/(B) to be in a range of from 0.01 to 0.2, the cyclic olefin polymer composition (B) is finely and uniformly dispersed in a matrix of the high isotactic homopolymer (A) of propylene. Generally, the dispersion state of the cyclic olefin polymer composition is believed to have an influence on the mechanical and electrical properties of the propylene composition. In other words, if the domains of the cyclic olefin polymer composition (B) are small, the electrical conductivity of the composition tends to be lowered at high temperatures. The dimensions and the shape of the domains which are formed by the cyclic olefin polymer composition (B) in the composition can be analyzed with an atomic force microscope (AFM) or another type of microscope.

Component (A)

The expression "homopolymer (A) of propylene" as used in the present invention relates to a polypropylene that consists substantially, *i.e.* of at least 99.5 wt.-%, more preferably of at least 99.8 wt.-%, of propylene units. Preferably, only propylene units are detectable in the propylene homopolymer via $^{13}C$ NMR spectroscopy, as described in the example section below.

The high isotactic homopolymer (A) of propylene preferably is a linear polypropylene, *i.e.* a polypropylene that does not have a detectable amount of long-chain or short-chain branches.

In a preferred embodiment of the present invention, the high isotactic homopolymer (A) of propylene is characterized by a rather high pentad isotacticity <mmmm>, measured by $^{13}C$ NMR. More specifically, the high isotactic homopolymer (A) of propylene may have an isotactic pentad fraction of from 93 to 99.5 %, preferably 95 to 99.0 %, more preferably from 96 to 98.5 %. In particular embodiments, the pentad isotacticity of the high isotactic homopolymer (A) of propylene is in the range of 96.0 to 98.5 %, still more preferably in the range of 97.0 to 98.0 %.

The high isotacticity preferably goes along with a high crystallinity of the material. Moreover, the high isotacticity is preferably accompanied by a low xylene cold soluble (XCS) content. Therefore, in a further preferred embodiment of the present invention, the high isotactic homopolymer (A) of propylene of the present invention is featured by a rather low XCS content, *i.e.* by a XCS content of equal or below 2.0 wt.-%, more preferably of equal or below 1.8 wt.-%, yet more preferably equal or below 1.6 wt.-%. Thus it is in particular appreciated that the high isotactic homopolymer (A) of propylene of the present invention has a XCS content in the range of 0.3 to equal or below 2.0 wt.-%, more preferably in the range of 0.3 to equal or below 1.8 wt.-%, yet more preferably in the range of 0.4 to equal or below 1.6 wt.-%.

Preferably, the XCS content refers to the XCS content as determined at 25 °C according to ISO 16152. It is further appreciated that the XCS content indicates that the high isotactic homopolymer (A) of propylene is preferably free of any elastomeric polymer component, like an ethylene propylene rubber. In other words, the high isotactic homopolymer (A) of

propylene does not correspond to a heterophasic polypropylene, *i.e.* a system consisting of a polypropylene matrix in which an elastomeric phase is dispersed. Such systems are usually featured by a rather high xylene cold soluble content.

Alternatively or in addition, it is preferred that the high isotactic homopolymer (A) of propylene of the present invention has a melt flow rate given in a specific range. For example, the high isotactic homopolymer of propylene may have a $MFR_2$ (230 °C), measured according to ISO 1133, of from 0.4 to 10 g/10 min, preferably of from 0.5 to 5 g/10 min. In a particularly preferred embodiment, the high isotactic homopolymer (A) of propylene has a $MFR_2$ (230 °C), measured according to ISO 1133, of from 2.0 to 4.5 g/10 min. In this context, it is acknowledged that $MFR_2$ (230 °C) denotes a melt flow rate measured under a load of 2.16 kg at 230 °C.

Furthermore, the high isotactic homopolymer (A) of propylene preferably has an ash content of 60 ppm or less, more preferably 30 ppm or less, even more preferably 20 ppm or less. Preferably, the ash content may be in a range from 5 to 30 ppm, in particular in a range from 10 to 20 ppm. A low ash content is crucial for the dielectric properties, such as the dielectric strength and the dielectric loss. The ash content may be measured according to ISO 3451-1 (1997).

The high isotactic homopolymer (A) of propylene may have a melting temperature, Tm, measured according to ISO 11357, in a range of from 150 to 170 °C, preferably 160 to 170 °C. The crystallization temperature, Tc, of the high isotactic homopolymer (A) of propylene as measured according to ISO 11357 may be in a range of from 110 to 130 °C, preferably of from 110 to 120 °C.

The high isotactic homopolymer (A) of propylene may also comprise one or more additives. Preferably the one or more additives are present in a content from 0 to 2.0 wt.-%, more preferably in an amount from 0.05 to 1.0 wt.-%, in particular in an amount from 0.05 to 0.6 wt.-%, based on the weight of the high isotactic homopolymer (A) of propylene.

The one or more additives may be non-polymeric additives and/or polymeric additives, with non-polymeric additives being preferred. For example, the one or more additives may be selected from the group consisting of antioxidants, stabilizers, acid scavengers, nucleating agents, colorants, plasticizers, slip agents, antiscratch agents, dispersing agents, processing aids, lubricants, pigments, antistatic agent, and the like. It is particularly preferred when the one or more additives are selected from the group consisting of antioxidants, stabilizers and acid scavengers and combinations thereof.

The antioxidants and stabilizers may be selected from the group of hindered phenols and more preferably from the group of hindered phenols not containing phosphorous or sulphur.

The antioxidants and stabilizers are especially preferably one or more compounds selected from the group consisting of 1,3,5-trimethyl-2,4,6-tris(3,5-di-tert-butyl-4-hydroxybenzyl)-benzene (sold under trade names Irganox 1330, Anox 330, Ethanox 330 and Kinox-30), pentaerythritol tetrakis(3-(3,5-di-tert-butyl-4-hydroxyphenyl)propionate) (sold under trade names Irganox 1010, Anox 20, Ethanox 310TF and Kinox-10), octadecyl 3-(3',5'-di-tert-butyl-4-hydroxyphenyl)propionate (sold under trade names Irganox 1076, Anox PP 18 and Kinox-16), butylhydroxytoluene (sold under trade names Ionol CP and Vulkanox BHT), 1,3,5-tris(3',5'-di-tert-butyl-4'-hydroxybenzyl)-isocyanurate (sold under trade names Irganox 3114, Anox IC-14, Ethanox 314 and Kinox-34), and 3,4-dihydro-2,5,7,8-tetramethyl-2-(4,8,12-trimethyltridecyl)-2H-1-benzopyran-6-ol (sold under trade names Irganox E 210 and alpha-tocopherol).

The antioxidants and stabilizers are preferably present in a total amount of from 500 to 8000 ppm, based on the total weight of the high isotactic homopolymer (A) of propylene. More preferably, antioxidants and stabilizers are present in a total amount of from 800 to 7000 ppm, still more preferably of from 1000 to 6000 ppm, and in particular from 1500 to 6000 ppm, based on the total weight of the high isotactic homopolymer (A) of propylene. In view of the desired application of the composition in the capacitor field, the antioxidants and stabilizers preferably do not contain phosphorous containing secondary antioxidants, such as tris(2,4-ditert-butylphenyl)phosphite. Without wishing to be bound by theory, the latter compounds are believed to increase the dissipation in the final capacitor.

Acid scavengers may be salts of organic acids, such as stearates. They typically serve to neutralize acids in a polymer. Examples of such compounds are calcium stearate, zinc stearate and zinc oxide. Acid scavengers are preferably used in an amount of from 20 ppm to 2000 ppm, more preferably from 50 ppm to 1000 ppm, most preferably from 60 to 600 ppm, based on the total weight of the high isotactic homopolymer of propylene (A).

Thus, the one or more additives may, for example, be selected from the group consisting of pentaerythritol tetrakis(3-(3,5-di-tert-butyl-4-hydroxyphenyl)propionate) (sold under trade names Irganox 1010 Anox 20, Ethanox 310TF and Kinox-10), butylhydroxytoluene (sold under trade names Ionol CP and Vulkanox BHT), calcium stearate and combinations thereof.

<u>Component (B)</u>

The cyclic olefin polymer composition (B) preferably is a thermoplastic composition.

The cyclic olefin polymer composition (B) may comprise or may essentially consist of one type of cyclic olefin polymer or of a blend of at least two different types of cyclic olefin polymers.

It is appreciated that the term "cyclic olefin polymer" refers to a polymer comprising a cyclic olefin unit. The cyclic olefin polymer may be a cyclic olefin homopolymer or a cyclic olefin copolymer.

Within the present invention the term "copolymer" refers to polymers prepared from at least two different monomers. In other words, the term "copolymer" also covers terpolymers and copolymers with four or more different monomeric units. Thus, a cyclic olefin polymer may be a copolymer comprising a first monomeric unit, which is a cyclic olefin unit, and at least one second monomeric unit, which is different from the first monomeric unit, such as a non-cyclic olefin unit. Cyclic olefin copolymers comprising at least a first cyclic olefin unit and a second cyclic olefin unit, which is different from the first cyclic olefin unit, are equally covered by the term "cyclic olefin polymer".

The cyclic olefin copolymer may be a random cyclic olefin copolymer or a cyclic olefin block copolymer (CBC). A cyclic olefin block copolymer may be obtained from styrene and conjugated diene, e.g. butadiene, via anionic polymerization and with an optional subsequent hydrogenation step. Hence, in a preferred embodiment, the cyclic olefin block copolymer may be a fully hydrogenated styrene-butadiene block copolymer. Such a cyclic olefin block copolymer is, for example, commercially available as ViviOn™ from USI Corporation. Use of a cyclic olefin block copolymer may be advantageous from the viewpoint of facilitating the further processing. It may, for instance be expected that stretching ratios of only 2.0 to 4.0 times in MD and TD direction are sufficient to produce an oriented film from a polypropylene composition comprising one or more cyclic olefin block copolymer as the cyclic olefin polymer composition (B).

The cyclic olefin polymer may either be obtained by ring-opening or ring-sustaining polymerization of at least one cyclic olefin monomer. Among these alternatives, a cyclic olefin polymer obtained by ring-sustaining polymerization is preferred.

In a further preferred embodiment, the at least one cyclic olefin monomer is selected from the group consisting of cyclopentadiene, tetracyclododecene, norbornene, styrene and derivatives of the aforementioned compounds. Norbornene and its derivatives are particularly preferred examples for the at least one cyclic olefin monomer.

Norbornene and its derivatives are preferably compounds according to formula (I),

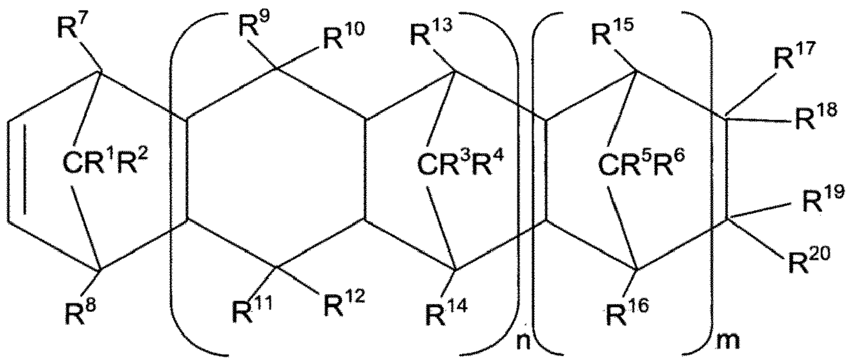

(I),

wherein n is 0 or 1,

m is 0 or an integer, in particular 0 or 1,

$R^1$, $R^2$, $R^3$, $R^4$, $R^5$, $R^6$ are independently selected from the group consisting of hydrogen, halogen, an alkyl group, a cycloalkyl group, an aryl group and an alkoxy group,

$R^7$, $R^8$, $R^9$, $R^{10}$, $R^{11}$, $R^{12}$, $R^{13}$, $R^{14}$, $R^{15}$, $R^{16}$ are independently selected from the group consisting of hydrogen and an alkyl group,

$R^{17}$, $R^{18}$, $R^{19}$, $R^{20}$ are independently selected from the group consisting of hydrogen, halogen, an alkyl group, a cycloalkyl group and an aryl group wherein $R^{17}$ and $R^{19}$ may alternatively form a cyclic ring or a cyclic system, wherein the cyclic ring or cyclic system may be saturated or unsaturated.

Further and equally preferred examples of norbornene derivatives are the compounds according to formula (II),

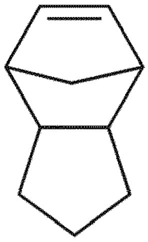,
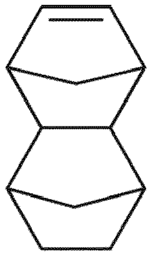,
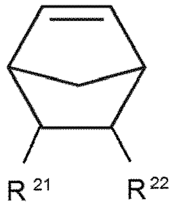,
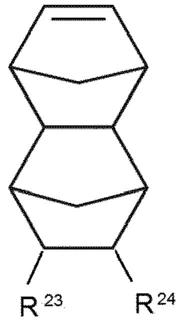
(II)

wherein $R^{21}$ and $R^{22}$ are independently selected from the group consisting of hydrogen, a $C_5$-$C_7$ cycloalkyl group, $C_5$-$C_7$ aryl group and a $C_1$-$C_4$ alkyl group and wherein $R^{23}$ and $R^{24}$ are independently selected from the group consisting of hydrogen and a $C_1$-$C_4$ alkyl group.

The non-cyclic olefin monomer can be an alpha-olefin and/or a conjugated diene. Non-limiting examples of alpha-olefins are $C_2$-$C_8$ alpha-olefins, such as alpha-olefins selected from the group consisting of ethylene, propylene, 1-butene, 2-methyl-1-propene (isobutylene) and 3-methyl-1-butene. Preferred alpha-olefins are linear $C_2$-$C_8$ alpha-olefins, such as ethylene and propylene. Particularly preferred is ethylene as alpha-olefin. A particularly preferred conjugated diene is butadiene.

In view of the above, the cyclic olefin polymer composition (B) may comprise cyclic olefin units, preferably selected from the group consisting of cyclopentadiene units, tetracyclododecene units, norbornene units, styrene units and units from derivatives of the aforementioned compounds, and non-cyclic olefin units, preferably an alpha-olefin unit and/or conjugated diene unit, more preferably a unit selected from $C_2$-$C_8$ alpha-olefin units.

In one embodiment, the cyclic olefin polymer composition (B) comprises at least one cyclic olefin copolymer selected from the group of norbornene-ethylene copolymers and tetracyclododecene-ethylene copolymers or a blend of at least two of said cyclic olefin copolymers. In a particularly preferred embodiment, the cyclic olefin polymer composition (B) comprises or essentially consists of one norbornene-ethylene copolymer or a blend of two norbornene-ethylene copolymers with different norbornene contents. Further, non-limiting examples of cyclic olefin polymers are polymers commercially available as APEL® from Mitsui Chemical or as TOPAS® from TOPAS Advanced Polymers.

The glass transition temperature (hereinafter also referred to as "Tg") of the cyclic olefin polymer composition (B) may be controlled by the type of monomers used, *e.g.* by the type of the at least one cyclic olefin monomer and optionally, if present, by the type of the non-cyclic olefin monomer. If the cyclic olefin polymer composition (B) is a blend of at least two cyclic olefin polymers, the weight ratio of the cyclic olefin polymers has an influence on the glass transition temperature of the compositions as well. Further, in case the cyclic olefin polymer composition (B) is a composition comprising at least one cyclic olefin copolymer, the amount of the cyclic olefin monomer may be used to customize the glass transition temperature of the overall composition. From norbornene-ethylene copolymers it is, for example, known that a higher glass transition temperature may be achieved by increasing the content of norbornene. The same applies to combinations of other cyclic olefin monomers with non-cyclic olefin monomers.

The cyclic olefin polymer composition (B) may comprise cyclic olefin units, for example norbornene units, in a content of from 70 to 90 wt.-%, preferably from 75 to 85 wt.-%, more preferably from 75 to 80 wt.-%, and non-cyclic olefin units, for example ethylene units, in a content of from 10 to 30 wt.-%, preferably from 15 to 25 wt.-%, more preferably from 20 to 25 wt.-%, wherein the contents are each based on the total weight of the cyclic olefin polymer composition (B). The content of the cyclic olefin units of the cyclic olefin polymer (B) may be determined by $^{13}C$ NMR spectroscopy, in case the cyclic olefin polymer (B) is soluble, or may be calculated from the glass transition temperature of the cyclic olefin polymer, in case the cyclic olefin polymer (B) is insoluble. If the cyclic olefin polymer (B) is a norbornene-ethylene copolymer and the cyclic olefin units are norbornene units, their content can be determined as described in Macromol. Chem. Phys. 199, 1221-1232 (1998).

In a preferred embodiment, the cyclic olefin polymer composition (B) may have a glass transition temperature, measured according to ISO 11357-3, in the range of from 130 to 180 °C. In another preferred embodiment, the cyclic olefin polymer composition (B) may have a glass transition temperature in the range of from 140 to 175 °C, in particular of from 145 to 170 °C, measured according to ISO 11357-3.

Additionally or alternatively the cyclic olefin polymer composition (B) may have a $MFR_2$ measured according to ISO 1133 at a temperature of 230 °C and at a load of 2.16 kg, of from 2 to 50 g/10 min, preferably from 8 to 25 g/10 min.

In a particularly preferred embodiment, the cyclic olefin polymer composition (B) comprises or essentially consists of at least a first cyclic olefin polymer (b1) and a second cyclic olefin polymer (b2). The first cyclic olefin polymer preferably has a glass transition temperature, measured according to ISO 11357, of below 140 °C, such as from 60 to below 140 °C, like from 100 to below 140 °C. The second cyclic olefin polymer preferably has a glass transition temperature, measured according to ISO 11357, of at least 155 °C, in particular of from at least 155 to 180 °C. The

first cyclic olefin polymer and the second cyclic olefin polymer may be melt-blended to form the cyclic olefin polymer composition, preferably in a weight ratio of 1:5 to 5:1, in particular in a weight ratio of 1:3 to 3:1.

It is assumed that the use of two cyclic olefin polymer with different glass transition temperatures results in a broad glass transition temperature step of the polypropylene composition and is, thus, responsible for an extended processing window of the polypropylene composition. Moreover, the use of two cyclic olefin polymers with different glass transition temperatures results in a better control of the high-temperature performance of the material.

Component (C)

The copolymer of ethylene and one or more $C_4$ to $C_8$ alpha olefin comonomers (C) preferably acts as a compatibilizer, in particular as a compatibilizer between the high isotactic homopolymer (A) of propylene and the cyclic olefin polymer composition (B). Without wishing to be bound by theory, it is assumed that the copolymer of ethylene and one or more $C_4$ to $C_8$ alpha olefin comonomers preferably accumulates at the interfaces between the cyclic olefin polymer composition (B) and the high isotactic homopolymer (A) of propylene. Further, it is assumed that dispersibility of the cyclic olefin polymer composition (B) in the high isotactic homopolymer (A) is promoted by the presence of the copolymer of ethylene and one or more $C_4$ to $C_8$ alpha olefin comonomers (C). This is supposed to have a beneficial influence also on the electrical conductivity which may accordingly be decreased at high temperatures.

In the copolymer of ethylene and one or more $C_4$ to $C_8$ alpha olefin comonomers (C), the one or more $C_4$ to $C_8$ alpha-olefin comonomers may be selected from 1-butene, 1-hexene or 1-octene. In a preferred embodiment, the one or more $C_4$ to $C_8$ alpha olefin comonomers are selected from 1-butene or 1-octene. In a further preferred embodiment, the copolymer (C) is a copolymer of ethylene and one $C_4$ to $C_8$ alpha olefin comonomer, such as a copolymer of ethylene and 1-butene or a copolymer of ethylene and 1-octene. In a particularly preferred embodiment, the copolymer of ethylene and one or more $C_4$ to $C_8$ alpha olefin comonomers (C) is a copolymer of ethylene and l-octene.

The comonomer content is preferably in a range of from 20.0 wt.-% to 45.0 wt.-%, depending on the chosen comonomer and the desired density. The ethylene content is, as a corollary, preferably in a range of from 55.0 wt.-% to 80.0 wt.-%. The ethylene content of the copolymer of ethylene and one or more $C_4$ to $C_8$ alpha olefin comonomers (C) may be measured by NMR.

Suitable copolymers of ethylene and one or more $C_4$ to $C_8$ alpha olefin comonomers (C) have a density in the range of from 860 to less than 900 $kg/m^3$, preferably from 865 to 890 $kg/m^3$, more preferably from 870 to 885 $kg/m^3$, determined according to ISO 1183. The melt flow rate $MFR_2$ measured according to ISO 1133 at a temperature of 190 °C and at a load of 2.16 kg, of the copolymer of ethylene and one or more $C_4$ to $C_8$ alpha olefin comonomers (C) may be in the range of from 0.5 to 25.0 g/10 min, more preferably of from 1.0 to 22.5 g/10 min, still more preferably of from 2.5 to 20.0 g/10 min, most preferably of from 3.0 to 10.0 g/10 min,

The melting temperature (Tm) of the copolymer of ethylene and one or more $C_4$ to $C_8$ alpha olefin comonomers (C) may be in a range of from 25 to 95°C, more preferably of from 30°C to 90°C, still more preferably of from 35°C to 85°C, most preferably of from 40°C to 80°C, when determined by differential scanning calorimetry according to ISO 11357-3 as the peak of the endotherm in the second heating step of a heat/cool/heat cycle with a scan rate of 10 °C/min in the temperature range of 23°C to 210°C.

Preferably, the copolymer of ethylene and one or more $C_4$ to $C_8$ alpha olefin comonomers (C) is obtained in a process in which ethylene and one or more $C_4$ to $C_8$ alpha olefin comonomers are polymerized in solution in the presence of a metallocene catalyst.

It is further preferred if the copolymer of ethylene and one or more $C_4$ to $C_8$ alpha olefin comonomers (C) is prepared by a one stage or two stage solution polymerization process, especially by high temperature solution polymerization process at temperatures higher than 100 °C.

Such a process is essentially based on polymerizing ethylene and one or more suitable comonomers in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Preferably the solution polymerization process is a high temperature solution polymerization process, using a polymerization temperature of higher than 100 °C. Preferably the polymerization temperature is at least 110 °C, more preferably at least 150 °C. The polymerization temperature can be up to 250 °C.

The pressure in such a solution polymerization process is preferably in a range of 10 to 100 bar, preferably 15 to 100 bar and more preferably 20 to 100 bar. The liquid hydrocarbon solvent used is preferably a $C_{5-12}$-hydrocarbon which may be unsubstituted or substituted by $C_{1-4}$ alkyl group such as pentane, methyl pentane, hexane, heptane, octane, cyclohexane, methylcyclohexane and hydrogenated naphtha. More preferably unsubstituted $C_{6-10}$-hydrocarbon solvents are used.

A known solution technology suitable for the process according to the invention is the BORCEED technology.

The copolymer of ethylene and one or more $C_4$ to $C_8$ alpha olefin comonomers (C) is commercially available, *i.a.*

from Borealis AG under the tradename Queo, from DOW under the tradename Engage or Affinity, or from Mitsui under the tradename Tafmer. Furthermore, the copolymer of ethylene and one or more $C_4$ to $C_8$ alpha olefin comonomers (C) may be referred to as a plastomer.

Film

The present invention furthermore provides a film comprising the polypropylene composition as described above. The film may be a compression moulded film. In this case, the film may be produced by means of a mould with a thickness of 10 to 300 μm, preferably with a thickness of 10 to 100 μm, more preferably with a thickness of 20 to 80 μm, in particular with a thickness of 60 μm, and at a temperature in a range from 190 to 230°C.

More preferred, however, is when the film comprising the polypropylene composition is a cast film. The cast film preferably has a thickness from 1 to 1000 μm, more preferably from 100 to 300 μm, most preferably from 200 to 300 μm.

A cast film of the polypropylene composition as described above preferably has an electrical conductivity of less than $6.0 \cdot 10^{-15}$ S/m, preferably less than $6.0 \cdot 10^{-16}$ S/m, more preferably in a range of from more than $1.0 \cdot 10^{-17}$ S/m to less than 6.0- $10^{-16}$ S/m, wherein the cast film is prepared and the electrical conductivity is measured according to the DC-conductivity method described below at a temperature of 90 °C.

Furthermore, a cast film of the polypropylene composition as described above may have an average aspect ratio of the domains of the cyclic olefin polymer composition (B), as visually determined in AFM images of 10x10 $\mu m^2$ cut-outs of the cast film with a thickness of 100 to 300 μm, of less than 7.0, preferably in a range of from 1.1 to less than 7.0, more preferably in a range of from 1.2 to less than 2.5. The average of the aspect ratio may be formed based on an evaluation of more than 30 samples.

The cast or compression moulded film may be stretched for its application as a capacitor. Thus, the present invention also provides a biaxially oriented film (BOPP). In particular, the biaxially oriented film can be a cast film that has been biaxially oriented. Preferably, the biaxially oriented film has a thickness from 1 to 50 μm, more preferably from 1 to 10 μm, most preferably from 2 to 6 μm. This is especially advantageous since current attempts are to provide electric systems with higher energy density and efficiency. Reducing the space requirement for a film in film capacitors helps to achieve this goal.

The biaxially oriented polypropylene film according to the present invention may be obtained in two steps. In a first step, a non-oriented cast film is produced by extruding the polypropylene composition through a flat die. In a second step, the non-oriented film is stretched in machine direction (MD) and transverse direction (TD). The stretching or orientation of the non-oriented film may be performed simultaneously in machine direction and transverse direction. The two steps of the method may preferably be conducted in a continuous process. Alternatively, the non-oriented film may be collected and cooled with a rotating chill roll for solidification of the film and may later on be stretched.

In an embodiment, the biaxially oriented polypropylene film comprises at least 80 wt.-%, more preferably comprises at least 90 wt.-%, yet more preferably consists of, the polypropylene composition as defined in the present invention. The biaxially oriented polypropylene film preferably has a stretching ratio of at least 2.5 times, preferably at least 3.0 times, more preferably at least 4 times, in particular at least 5 times, in the machine direction and at least 2.5 times, preferably at least 3.0 times, more preferably at least 4 times, in particular at least 5 times, in the transverse direction, more preferably has a stretching ratio of at least 9 times in the machine direction and at least 5 times in the transverse direction.

The biaxially oriented polypropylene film can be prepared by conventional drawing processes known in the art. Accordingly, the process for the manufacture of a biaxially oriented polypropylene film preferably may make use of the tenter method known in the art.

The tenter method is a method in which the polypropylene composition as defined herein is melt extruded from a slit die such as a T-die and cooled on a cooling drum obtaining a non-oriented film. Said film is pre-heated, for example with a heated metal roll, and then stretched in the length direction between a plurality of rolls over which a difference in peripheral speeds is established and then both edges are gripped with grippers and the sheet is stretched in the transverse direction in an oven by means of a tenter resulting in a biaxially oriented film. The temperature of said film during the longitudinal drawing is preferably controlled in such a way as to be within the temperature range of the melting point of the polypropylene composition.

Subsequently, the biaxially oriented film can be treated by corona discharge in air, nitrogen, carbon dioxide gas or any of the mixtures. If the film should be metallized for film capacitor applications, this enhances the adhesive strength to the metal that is to be deposited.

Capacitor

In another aspect, the present invention relates to a capacitor comprising the biaxially oriented film as described above. Capacitors comprising this biaxially oriented film are expected to have a longer lifetime and a higher temperature resistance than conventional capacitors. Preferably, the biaxially oriented film as described above is metallized and the

capacitor is a metalized film capacitor. The metallization of the biaxially oriented film can be performed by any process that is known in the art, for example by evaporation, electrodeposition, melting, ion beam vacuum deposition, sputtering or ion plating. The thickness of the obtained metal layer may be from 100 Å (0.01 μm) to 5000 Å (0.5 μm).

Alternative polypropylene composition

In a second, alternative aspect, a polypropylene composition is provided which comprises a high isotactic homopolymer (A) of propylene, a cyclic olefin polymer composition (B) and a copolymer of ethylene and one or more $C_4$ to $C_8$ alpha olefin comonomers (C), wherein the high isotactic homopolymer (A) of propylene is present in an amount of 70 wt.-% or more based on the total weight of the polypropylene composition and wherein a weight ratio (C)/(B) of the copolymer of ethylene and one or more $C_4$ to $C_8$ alpha olefin comonomers (C) to the cyclic olefin polymer composition (B) is in a range of from 0.01 to 0.2, with the proviso that the contents of components (A) to (C) add up to 100 wt.-%.

The polypropylene composition according to this second aspect can also be processed into a film (oriented or non-oriented) in the same way as the polypropylene composition as described before. Also a capacitor comprising the biaxially oriented film can be prepared from the polypropylene composition according to the second aspect. Furthermore, the preferred features of components (A)-(C) as defined above equally apply to the polypropylene composition according to the second aspect.

## Brief Description of the Drawings

Embodiments of the present invention are illustrated by way of example and are not limited by the figures of the accompanying drawings.

**Fig. 1** shows a temperature program that can be applied in the DC-Conductivity-measurement method;

**Fig. 2 (a) and (b)** show SEM images of a polypropylene composition according to example IE2 of the present invention in different magnifications;

Fig. 3 (a) to (d) show atomic force microscope topography and phase images of a polypropylene composition according to example IE2 of the present invention in different magnifications;

Fig. 4 (a) to (d) present atomic force microscope images of non-oriented cast films of a polypropylene composition according to examples IE1(a and b) and CE3 (c and d) of the present invention in Machine Direction (a) and (c) and Transverse Direction (b) and (d).

## Detailed Description of the Drawings and Examples

Measurement Methods

*Quantification of isotacticity of component (A) by NMR spectroscopy*

Quantitative nuclear-magnetic resonance (NMR) spectroscopy was also used to quantify the isotacticity of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm extended temperature probehead at 125 °C using nitrogen gas for all pneumatics. For polypropylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromoleucles 30 (1997) 6251). Standard single-pulse excitation was employed utilizing the NOE and bi-level WALTZ16 decoupling scheme (Zhou, Z., Kuemmerle, R., Qiu, X., Red-wine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For polypropylene homopolymers all chemical shifts are internally referenced to the methyl isotactic pentad

<mmmm> at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (\ mmmm\ /\ \text{sum of all pentads}\ )$$

*$MFR_2$*

The $MFR_2$ was measured according to ISO 1133 (at 2.16 kg load) and either at a temperature of 230 °C (for component A and D) or at a temperature of 260 °C (for component B) or a temperature of 190 °C (for component C).

*XCS content*

The XCS content was determined in weight percent according to ISO 16152 as follows:
2.0 g of the sample were dissolved in 250 ml p-xylene at 135 under agitation. After 30 minutes, the solution was allowed to cool for 15 minutes at ambient temperature and then allowed to settle for 30 minutes at 25 +/- 0.5 °C. The solution was filtered with filter paper into two 100 mL flasks. The solution from the first 100 mL flask was evaporated in nitrogen flow and the residue dried under vacuum at 90 until constant weight is reached. The xylene soluble fraction (in weight percent) can then be determined as follows:

$$XCS = (100*m*V_0)/(m_0*v)$$

with $m_0$ = initial polymer amount (g); m = weight of residue (g); $V_0$ = initial volume (ml); v = volume of analyzed sample (mL).

*Glass transition temperature Tg*

The characterization of polymers in the solid state under oscillatory deformation in torsional mode complies with ISO standards 6721-1, 6721-7 and 6721-11. The measurements were performed on Anton Paar 301, on rectangular samples with length of around 40 mm, width of ca. 10 mm and 1 mm thickness that were cut from compression-moulded plates. The samples are hold with grips under a normal force of 0.6 N. The frequency is set to 1 Hz (6,28 rad/s), and the strain amplitude is set within the linear viscoelastic regime to 0.2%.

The temperature was controlled using liquid nitrogen ($N_2$), increased from initial temperature of -50°C, to a relevant final temperature by heating rate of 2 °C/min. The storage and loss moduli (G', and G") as well as phase shift (tan$\delta$) are recorded over the temperature ramp. The maximum of tan$\delta$ is taken as Tg of the samples.

*Melting temperature Tm, crystallization temperature Tc*

Differential Scanning Calorimetry (DSC) experiments were run on a TA Instruments Q2000 device calibrated with Indium, Zinc, Tin according to ISO 11357-1. The measurements were run under nitrogen atmosphere (50 mL $min^{-1}$) on 5 $\pm$0.5 mg samples in a heat/cool/heat cycle with a scan rate of 10 K/min according to ISO 11357-3. Melting (Tm) and crystallization (Tc) temperatures were taken as the peaks of the endotherms and exotherms in the cooling cycle and the second heating cycle respectively.

*Ash content - component (A)*

The ash content of component (A) was determined according to measured according to ISO 3451-1 (1997). Doing so, about 100 g of polymer were weighed into a platinum crucible. The crucible is then heated in a Bunsen burner flame so that the polymer slowly burns. After the polymer is completely burned the crucible is cooled, dried and weighed.

The ash content is then the weight of the residue divided by the weight of the polymer sample. At least two measurements are made and if the difference between the measurements is more than 7 ppm then a third measurement is made.

*Components*

The components as listed in table 1 below have been used to prepare comparative polypropylene compositions CE1-CE3 and inventive polypropylene compositions IE1 and IE2.

**Table 1:** Polymers used for the production of CE1-CE3 and IE1, IE2.

| | |
|---|---|
| **A1** | Capacitor high isotacticity homopolymer PP<br>$MFR_2$ = 3.0 g/10min, Tc = 113 °C<br><mmmm> = 96.8%<br>Produced in the same way as CE2a of WO 2021/239594 A1 |
| **A2** | Capacitor high isotacticity homopolymer PP<br>$MFR_2$ = 3.3 g/10min, Tc =115 °C, Ash content < 20 ppm, <mmmm> = 97.2%<br>Commercially available as HC300BF from Borealis |
| **B** | Blend of<br>50 wt.-% TOPAS COC 6013S-04 and<br>50 wt.-% TOPAS COC 6015S-04<br>$MFR_2$=10<br>Tg = 147 °C<br>Norbornene content = 77.5 wt.-%<br>COC 6013S-04 and COC 6015S-04 being commercially available from TOPAS |
| **C** | Copolymer of ethylene and 1-octene<br>Density = 870 kg/$m^3$<br>$MFR_2$ = 6.6 g/10 min<br>Commercially available as Queo7007LA from Borealis |
| **D** | Polypropylene random copolymer<br>$MFR_2$ = 8 g/10 min<br>Prepared according to the synthesis protocol below |

*Preparation of Component (D)*

The polypropylene random copolymer has been prepared in a sequential process comprising a prepolymerization reactor (Prepoly), a loop reactor (Loop) and a gas phase reactor (GPR1).

The catalyst used in the polymerization process was prepared according to paragraphs [0162]-[0166] of EP 2 965 908 A1.

*Use of the catalyst for Polymerization of Component (D)*

The molar ratio of co-catalyst (Co) to external donor (ED) [Co/ED] and the molar ratio of co-catalyst (Co) to titanium compound (TC) [Co/TC] are indicated in Table 2. The polymerization conditions are also indicated in Table 2.

In addition to the polymerization conditions in table 2, visbreaking was done by using a co-rotating twin-screw extruder at 200-230°C and using an appropriate amount of (tert.-butylperoxy)-2,5-dimethylhexane (Trigonox 101, distributed by Akzo Nobel, Netherlands) to achieve the target $MFR_2$ of 8 g/10min.

**Table 2:** Polymerization conditions in the preparation of component D.

| **Prepoly** | | |
|---|---|---|
| Co/ED | mol/mol | 5 |
| Co/TC | mol/mol | 90 |
| Temperature | °C | 30 |

(continued)

| | | |
|---|---|---|
| **Prepoly** | | |
| Residence time | min | 0.3 |
| **Loop** | | |
| Temperature | °C | 70 |
| Pressure | kPa | 5400 |
| Split | wt.-% | 45 |
| H2/C3 | mol/kmol | 0.8 |
| C2/C3 | mol/kmol | 4.8 |
| $MFR_2$ | g/10min | 2.1 |
| C2 | wt.-% | 2.1 |
| XCS | wt.-% | 5.0 |
| **GPR1** | | |
| Temperature | °C | 80 |
| Pressure | kPa | 2200 |
| Split | wt.-% | 55 |
| H2/C3 | mol/kmol | 5.3 |
| C2/C3 | mol/kmol | 10.2 |
| $MFR_2$ | g/10min | 1.6 |
| C2 | wt.-% | 2.1 |
| XCS | wt.-% | 5.0 |
| **Mixer** | | |
| C2 | wt.-% | 2.1 |
| $MFR_2$ | g/10min | 1.8 |
| **Pellet** | | |
| $MFR_2$ | g/10min | 8 |
| XCS | wt.-% | 5.0 |
| Tm | °C | 148.9 |
| Tc | °C | 106 |
| **Additives** | | |
| (a) | wt.-% | 0.03 |
| (b) | wt.-% | 0.07 |
| (c) | wt.-% | 0.02 |
| (a) Pentaerythrityl-tetrakis(3-(3',5'-di-tert-butyl-4-hydroxyphenyl)-propionate, CAS-No. 6683-19-8, Irganox 1010 of BASF SE, Germany<br>(b) Tris (2,4-di-t-butylphenyl) phosphite, CAS-No. 31570-04-4, Irgafos 168 of BASF SE, Germany<br>(c) Mg-oxide, CAS-No. 1309-48-4 | | |

*Polypropylene Composition*

The components as outlined above have been blended in the ratios as listed in Table 3 in order to obtain example polypropylene compositions.

**Table 3:** Comparative polypropylene composition CE1-CE3 (not including component C) as opposed to inventive polypropylene compositions IE1 and IE2 (including component C).

| | CE1 | CE2 | CE3 | IE1 | IE2 |
|---|---|---|---|---|---|
| **A1** | 100 | 85.0 | 84.0 | 84.5 | - |
| **A2** | - | - | - | - | 84.5 |
| **B** | - | 15.0 | 15.0 | 15.0 | 15.0 |
| **C** | - | - | - | 0.5 | 0.5 |
| **D** | - | - | 1.0 | - | - |

*Evaluation by SEM images*

Polypropylene composition IE2 was extruded and cryocut. Before obtaining SEM images, the cut strand of the polypropylene composition was extracted with xylene to remove components (B) and (C). Two different magnifications were chosen (30,000 and 50,000) to arrive at the SEM images in Figs. 2(a) and 2(b).

As is clearly evident from the SEM images, larger and smaller holes can be detected in the polypropylene matrix after extraction with xylene. It is assumed that the larger holes are the voids caused by extraction of the cyclic olefin polymer composition, i.e. component (B), whereas the smaller holes are the places where Queo7007LA, i.e. component (C) was located. Based on this assumption it can be concluded that component (C) is accumulated at the interface of the other two components in the polypropylene composition and acts as a compatibilizer.

*Evaluation of dispersion and interface properties*

Polypropylene composition IE2 was extruded and cryocut. The dispersion and interface properties were analyzed with an atomic force microscope (AFM) on the cryocut samples without xylene extraction. Two different magnifications were chosen to arrive at the AFM images in Figs. 3(a) and (b) on the one hand and 3(c) and 3(d) on the other hand. Figs. (a) and (c) are topography images, whereas Figs. (b) and (d) are phase images.

The topography images suggest that there is a fine dispersion of component (B) in the polypropylene matrix (A). The phase images confirm this conclusion and show that a component with a comparable low elastic modulus, Queo7007LA, i.e. component (C), accumulates at the interface between two components with a higher elastic modulus, i.e. between component (A) and component (B).

*Films - Evaluation of morphological properties*

Cast films with a thickness of 240 μm were prepared from the polypropylene compositions IE1 and CE3. The cross section of the cast films were analyzed with an AFM. Images collected in Machine Direction are shown on the left, in Figs. 4(a) and 4(c). Images collected in Transverse Direction (TD) are shown on the right, in Figs. 4(b) and 4(d).

In TD, the elongated particles present in the cast film of the IE1 show a smaller size and aspect ratio compared to the ones in the CE3. In MD however the difference is clearer, with shorter particles and smaller aspect ratios for the inventive film IE1. However, it has to be noted that the COC domains, especially for the CE3 film, are elongated and cross the border of the image.

*Films - Evaluation of Electrical Properties*

DC-Conductivity method: Cast non-oriented films with a thickness of 240 μm were prepared and tested with an applied electric field of 30 kV/mm. The resulting current through the sample is measured with an electrometer/picoammeter. The measurement cell is a three electrodes system with brass electrodes placed in a heated oven circulated with dried compressed air to maintain constant humidity level. The diameter of the measurement electrode is 100 mm and made of stainless steel. On the side of the plaque connected to high voltage a thin sheet made of stainless steel is placed. The films were first annealed at 115°C for 23-24 hours. The DC conductivity value at 115°C reported in Table 4 was measured at this stage. Afterwards, the temperature was lowered to 70°C over 6 hours, and then raised to the desired testing temperature (such as 90°C, 100°C, 110°C) for 4 hours. As can be seen from the temperature program in Fig. 1, the desired testing temperatures can be applied consecutively. The electric conductivity obtained during the measurement is the value obtained at each temperature at the end of the respective 4 hours interval.

The results of the measurements can be found in Table 4.

**Table 4:** Electrical properties of CE1-CE3 as opposed to IE1 and IE2.

| | CE1 | CE2 | CE3 | IE1 | IE2 |
|---|---|---|---|---|---|
| **Electrical Conductivity in fS/m** | | | | | |
| **@ 90 °C** | 0.6 | 0.5 | 0.4 | 0.4 | 0.1 |
| **@ 100 °C** | n.d. | n.d. | 1.3 | 1.0 | 0.4 |
| **@ 110 °C** | n.d. | n.d. | 3.8 | 2.1 | 1.5 |
| **@ 115 °C** | 13.1 | 3.8 | 11 | 2.6 | 1 |
| *n.d. = not determined | | | | | |

As may be derived from table 4, the electrical conductivity of the inventive films IE1 and IE2, is reduced relative to the electrical conductivity of the comparative films CE1-CE3 at temperatures of or above 100 °C.

## Claims

**1.** Polypropylene composition comprising

70 to 95 wt.-%, preferably 74.75 to 90 wt.-%, based on the total weight of the polypropylene composition of a high isotactic homopolymer (A) of propylene,
more than 2.5 to less than 30 wt.-%, preferably 5 to 25 wt.-% based on the total weight of the polypropylene composition of a cyclic olefin polymer composition (B), and
0.1 to 2.5 wt.-%, preferably 0.25 to 2 wt.-% based on the total weight of the polypropylene composition of a copolymer of ethylene and one or more $C_4$ to $C_8$ alpha olefin comonomers (C).

**2.** Polypropylene composition according to claim 1, wherein the weight ratio (C)/(B) of the copolymer (C) to the cyclic olefin polymer composition (B) is in a range of from 0.01 to 0.2, preferably of from 0.01 to 0.1, more preferably of from 0.02 to 0.075, even more preferably from 0.02 to 0.05.

**3.** Polypropylene composition according to one of the preceding claims, wherein the copolymer (C) is a copolymer of ethylene and one $C_4$ to $C_8$ alpha olefin comonomer, preferably a copolymer of ethylene and 1-butene or a copolymer of ethylene and 1-octene.

**4.** Polypropylene composition according to one of the preceding claims, wherein the copolymer (C) has at least one of:

• a density of from 860 to less than 900 kg/m$^3$, preferably from 865 to 890 kg/m$^3$, more preferably from 870 to 885 kg/m$^3$, determined according to ISO 1183,
• a melt flow rate $MFR_2$, measured according to ISO 1133 at a temperature of 190 °C and at a load of 2.16 kg, of from 0.5 to 25.0 g/10 min, more preferably of from 1.0 to 22.5 g/10 min, still more preferably of from 2.5 to 20.0 g/10 min, most preferably of from 3.0 to 10.0 g/10 min, and
• a melting temperature (Tm) of from 25 to 95°C, more preferably of from 30°C to 90°C, still more preferably of from 35°C to 85°C, most preferably of from 40°C to 80°C, determined by differential scanning calorimetry according to ISO 11357-3 as the peak of the endotherm in the second heating step of a heat/cool/heat cycle with a scan rate of 10 °C/min.

**5.** Polypropylene composition according to one of the preceding claims, wherein the copolymer (C) is obtained by polymerizing ethylene and one or more $C_4$ to $C_8$ alpha olefin comonomers in a solution in the presence of a metallocene catalyst.

**6.** Polypropylene composition according to one of the preceding claims, wherein the cyclic olefin polymer composition (B) has at least one of:

• a glass transition temperature, measured by DMTA, in the range of from 130 to 180 °C, preferably in the range of from 140 to 175 °C, even more preferably in the range from 145 to 170 °C and
• a $MFR_2$, measured according to ISO 1133 at a temperature of 260 °C and at a load of 2.16 kg, of from 2 to 50 g/10

min, preferably from 8 to 25 g/10 min.

**7.** Polypropylene composition according to one of the preceding claims, wherein the cyclic olefin polymer composition (B) is a cyclic olefin copolymer composition.

**8.** Polypropylene composition according to one of the preceding claims, wherein the cyclic olefin polymer composition (B) comprises:

- cyclic olefin units, preferably selected from the group consisting of cyclopentadiene units, tetracyclododecene units, norbornene units, styrene units and units from derivatives of the aforementioned compounds, and
- non-cyclic olefin units, preferably alpha-olefin units and/or conjugated diene units, more preferably units selected from $C_2$-$C_8$ alpha-olefin units.

**9.** Polypropylene composition according to one of the preceding claims, wherein the cyclic olefin polymer composition (B) comprises:

- from 70 to 90 wt.-%, preferably from 75 to 85 wt.-%, more preferably from 75 to 80 wt.-% of cyclic olefin units,
- from 10 to 30 wt.-%, preferably from 15 to 25 wt.-%, more preferably from 20 to 25 wt.-% of non-cyclic olefin units,

wherein the contents are each based on the total weight of the cyclic olefin polymer composition (B).

**10.** Polypropylene composition according to one of the preceding claims, wherein the cyclic olefin polymer composition (B) comprises at least a first cyclic olefin polymer (b1) and a second cyclic olefin polymer (b2), wherein the first cyclic olefin polymer (b1) preferably has a glass transition temperature, measured according to ISO 11357, of below 140 °C, in particular of from 60 to below 140°C, and the second cyclic olefin polymer (b2) preferably has a glass transition temperature, measured according to ISO 11357, of at least 155 °C, in particular of from at least 155 to 180 °C.

**11.** Polypropylene composition according to one of the preceding claims, wherein the high isotactic homopolymer (A) of propylene has at least one of:

- a content of isotactic pentad fraction, measured with $^{13}C$ NMR, of from 93 to 99.5 %, preferably 95 to 99.0 %, more preferably from 96 to 98.5 %,
- a $MFR_2$, measured according to ISO 1133 at a temperature of 230 °C and at a load of 2.16 kg, of from 0.4 to 10 g/10 min, preferably of from 0.5 to 5 g/10 min,
- an ash content, measured according to ISO 3451-1 (1997), of 60 ppm or less, preferably 30 ppm or less, and
- a crystallization temperature (Tc), measured according to ISO 11357, of from 110 to 130 °C, preferably from 110 to 120 °C.

**12.** Film comprising the polypropylene composition according to one of the preceding claims.

**13.** Film according to claim 12, having an electrical conductivity of less than $6.0- 10^{-15}$ S/m, preferably less than $6.0 \cdot 10^{-16}$ S/m, more preferably in a range of from more than $1.0 \cdot 10^{-17}$ S/m to less than $6.0 \cdot 10^{-16}$ S/m, wherein the electrical conductivity is measured according to the DC-Conductivity method in the description at a temperature of 90 °C.

**14.** Biaxially oriented film comprising the polypropylene composition according to one of claims 1 to 11.

**15.** Capacitor comprising the biaxially oriented film according to claim 14.

**Figure 1**

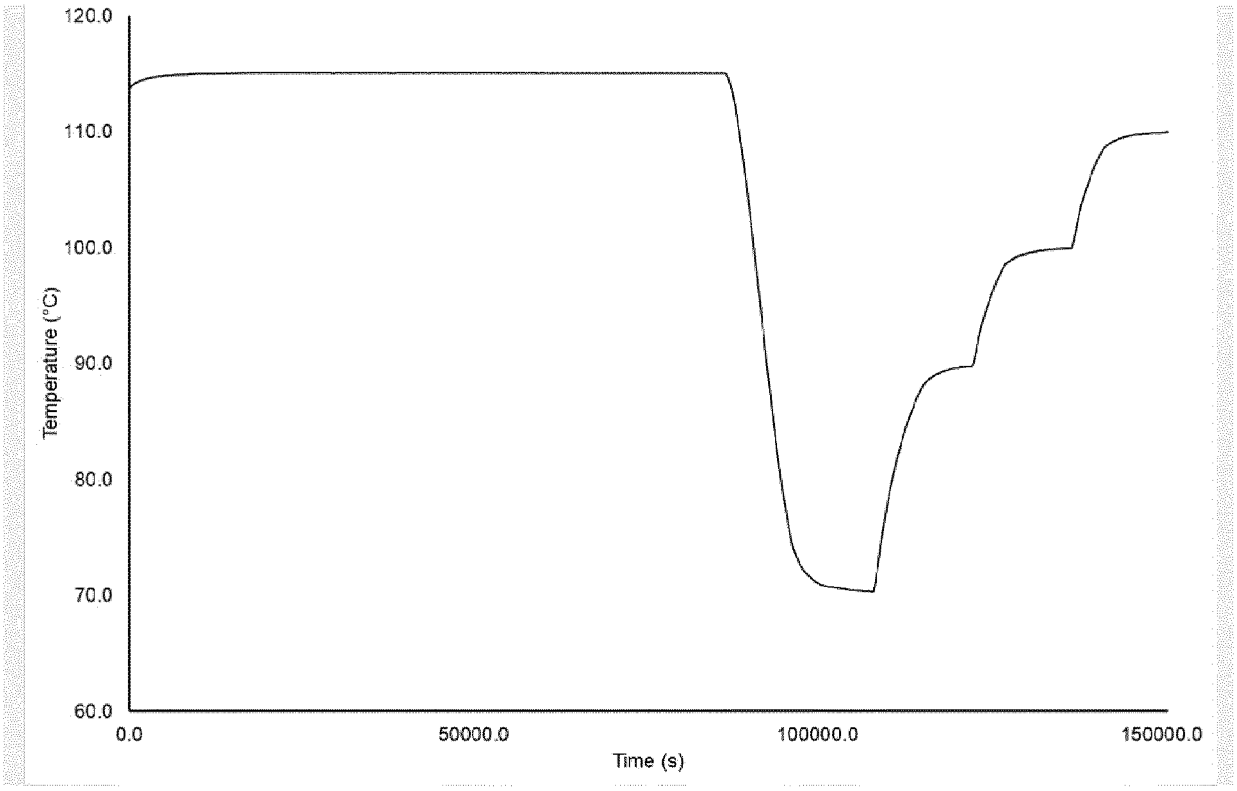
120.0
110.0
100.0
90.0
80.0
70.0
60.0
Temperature (°C)
0.0
50000.0
100000.0
150000.0
Time (s)

**Figure 2**

(a)

(b)

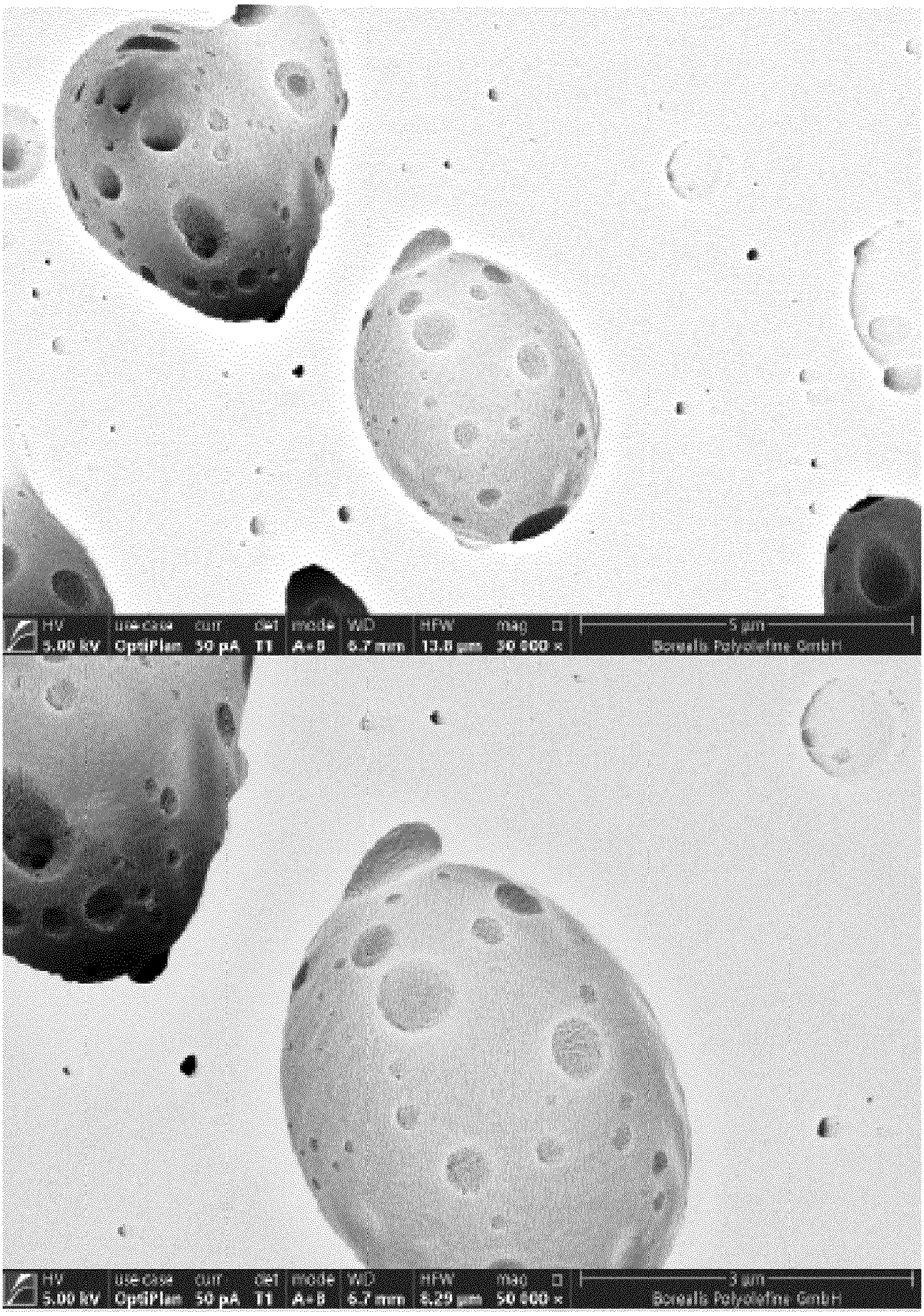
HV 5.00 kV
use case OptiPlan
curr 50 pA
det T1
mode A+B
WD 6.7 mm
HFW 13.8 µm
mag 30 000 x
5 µm
Borealis Polyolefine GmbH
HV 5.00 kV
use case OptiPlan
curr 50 pA
det T1
mode A+B
WD 6.7 mm
HFW 8.29 µm
mag 50 000 x
3 µm
Borealis Polyolefine GmbH

Figure 3

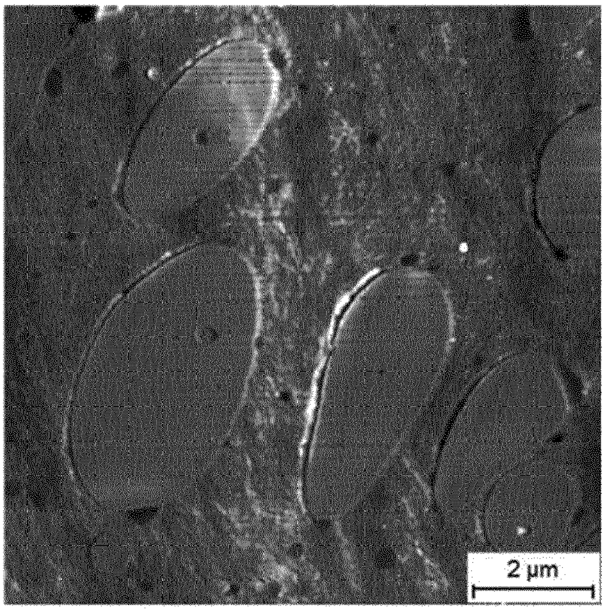


(a)

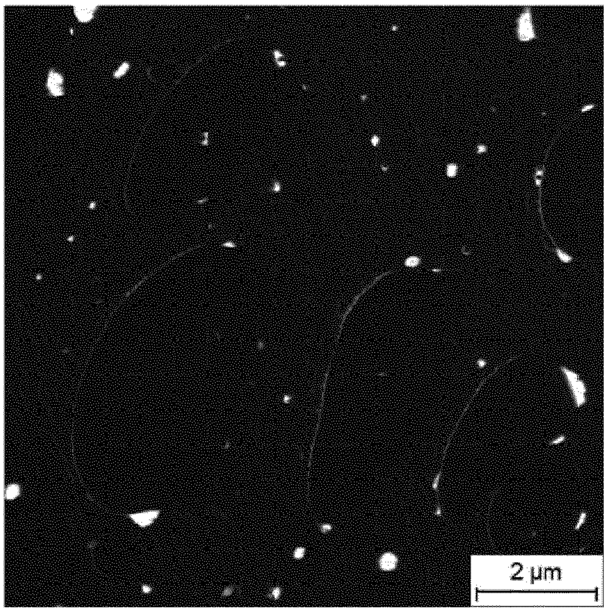


(b)

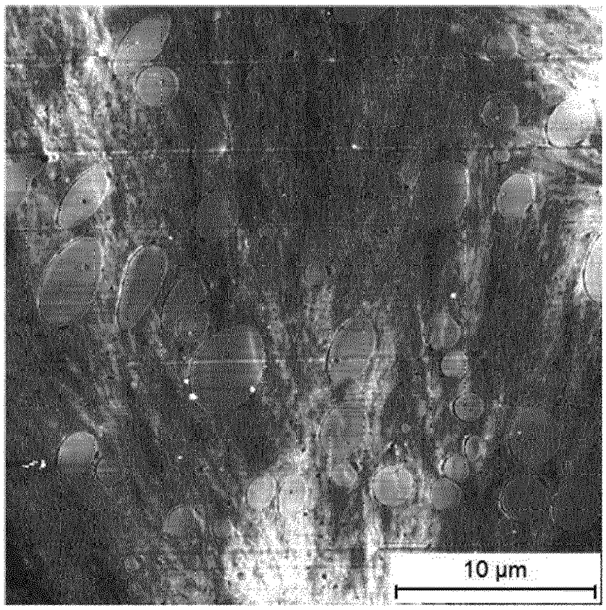


(c)

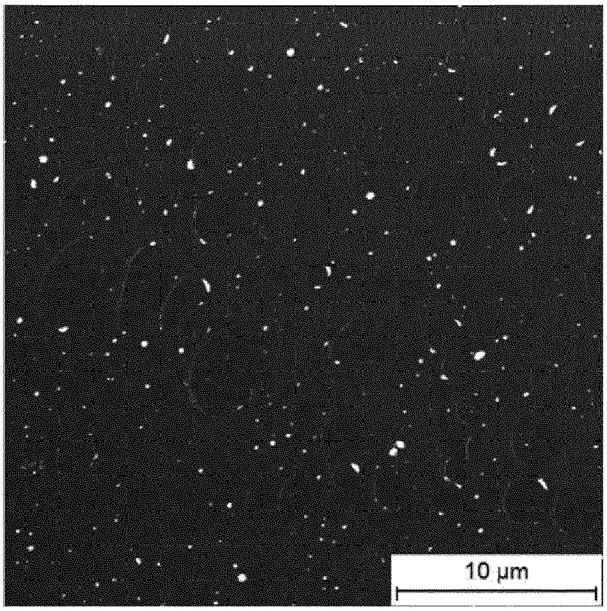


(d)

**Figure 4**

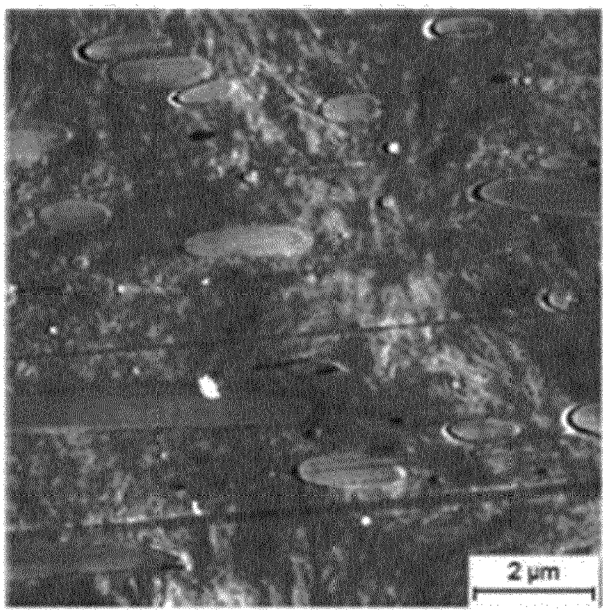


**(a)**

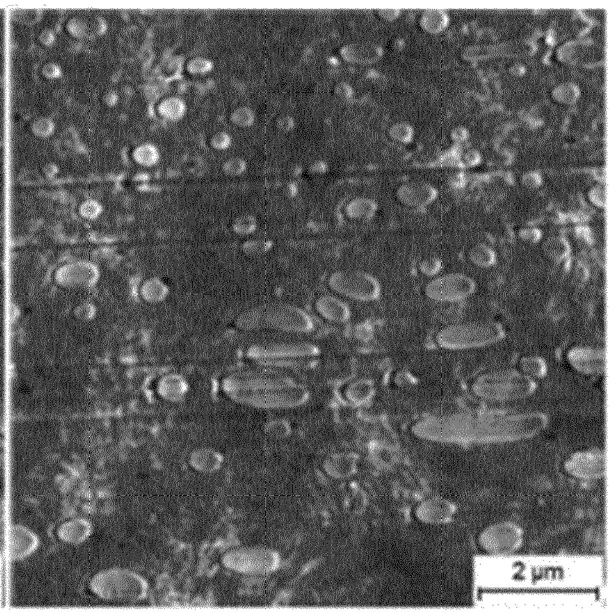


**(b)**

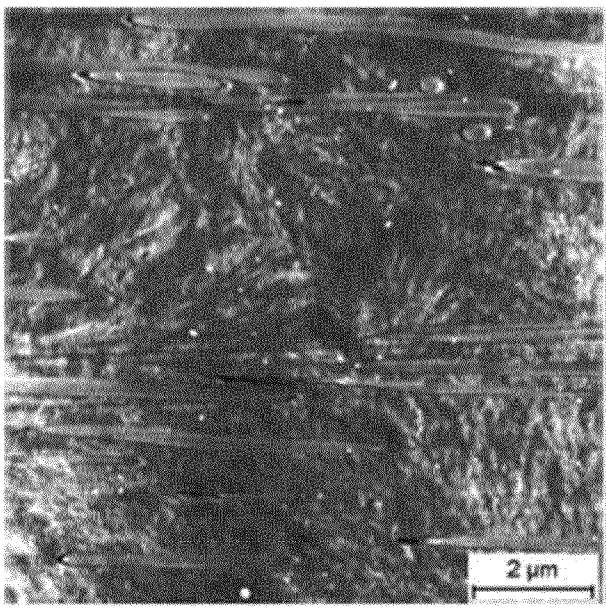


**(c)**

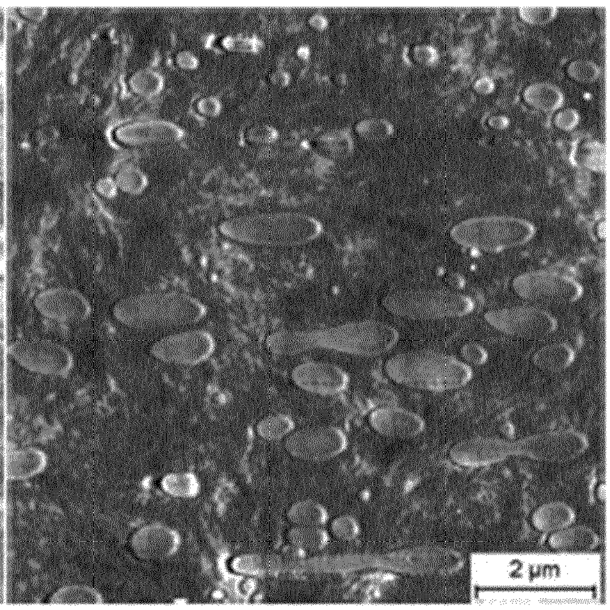


**(d)**

Europäisches Patentamt
European Patent Office
Office européen des brevets

# EUROPEAN SEARCH REPORT

Application Number
EP 24 16 7008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 193 013 B2 (IDEMITSU KOSAN CO [JP]) 20 March 2007 (2007-03-20)<br>* examples 3,4 *<br>----- | 1-15 | INV.<br>C08L23/12 |
| A | US 6 100 347 A (KUMANO YUUTA [JP] ET AL) 8 August 2000 (2000-08-08)<br>* example ce 3 *<br>----- | 1-15 | |
| A | EP 4 174 120 B1 (BRUECKNER MASCHBAU [DE]) 13 December 2023 (2023-12-13)<br>* examples 4,5 *<br>----- | 1-15 | |
| A | US 6 001 455 A (NISHIO TAKEYOSHI [JP] ET AL) 14 December 1999 (1999-12-14)<br>* example 6 *<br>----- | 1-15 | |
| A | US 2024/062931 A1 (HAGSTRAND PER-OLA [SE] ET AL) 22 February 2024 (2024-02-22)<br>* example 7 *<br>----- | 1-15 | |
| | | | TECHNICAL FIELDS SEARCHED (IPC) |
| | | | C08L |

The present search report has been drawn up for all claims

1

| Place of search | Date of completion of the search | Examiner |
|---|---|---|
| Munich | 16 August 2024 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 16 7008

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2024

| Patent document cited in search report | Publication date | Patent family member(s) | Publication date |
|---|---|---|---|
| US 7193013 B2 | 20-03-2007 | DE 60207996 T2 | 22-06-2006 |
| | | EP 1367093 A1 | 03-12-2003 |
| | | JP 4237492 B2 | 11-03-2009 |
| | | JP WO2002062889 A1 | 10-06-2004 |
| | | US 2004072950 A1 | 15-04-2004 |
| | | WO 02062889 A1 | 15-08-2002 |
| US 6100347 A | 08-08-2000 | DE 69629047 T2 | 03-06-2004 |
| | | EP 0857754 A1 | 12-08-1998 |
| | | JP H09111058 A | 28-04-1997 |
| | | US 6100347 A | 08-08-2000 |
| | | WO 9715622 A1 | 01-05-1997 |
| EP 4174120 B1 | 13-12-2023 | CN 116063791 A | 05-05-2023 |
| | | DE 102021128332 A1 | 04-05-2023 |
| | | EP 4174120 A1 | 03-05-2023 |
| | | HU E065570 T2 | 28-06-2024 |
| | | JP 2023067823 A | 16-05-2023 |
| | | KR 20230062415 A | 09-05-2023 |
| | | PL 4174120 T3 | 22-04-2024 |
| US 6001455 A | 14-12-1999 | DE 69503428 T2 | 19-11-1998 |
| | | EP 0682074 A1 | 15-11-1995 |
| | | JP 2886107 B2 | 26-04-1999 |
| | | JP H083332 A | 09-01-1996 |
| | | US 6001455 A | 14-12-1999 |
| US 2024062931 A1 | 22-02-2024 | CN 116802229 A | 22-09-2023 |
| | | EP 4275219 A1 | 15-11-2023 |
| | | KR 20230129488 A | 08-09-2023 |
| | | US 2024062931 A1 | 22-02-2024 |
| | | WO 2022148860 A1 | 14-07-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 101724195 A
- EP 2995641 A1
- WO 2018210854 A1
- WO 2018197034 A1
- EP 4174120 A1
- WO 2021239594 A1
- EP 2965908 A1


### Non-patent literature cited in the description


- *Macromol. Chem. Phys.*, 1998, vol. 199, 1221-1232
- **BUSICO, V.** ; **CIPULLO, R**. *Prog. Polym. Sci.*, 2001, vol. 26, 443
- **BUSICO, V** ; **CIPULLO, R.** ; **MONACO, G** ; **VACATELLO, M** ; **SEGRE, A.L**. *Macromoleucles*, 1997, vol. 30, 6251
- **ZHOU, Z.** ; **KUEMMERLE, R** ; **QIU, X** ; **RED-WINE, D** ; **CONG, R** ; **TAHA, A.** ; **BAUGH, D.** ; **WINNIFORD, B**. *J. Mag. Reson.*, 2007, vol. 187, 225
- **BUSICO, V** ; **CARBONNIERE, P** ; **CIPULLO, R.** ; **PELLECCHIA, R** ; **SEVERN, J.** ; **TALARICO, G**. *Macromol. Rapid Commun.*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N**. *Macromolecules*, 1984, vol. 17, 1950
- **BUSICO, V.** ; **CIPULLO, R** ; **MONACO, G.** ; **VACATELLO, M** ; **SEGRE, A.L.** *Macromoleucles*, 1997, vol. 30, 6251